# EUROPEAN PATENT SPECIFICATION

(11) **EP 3 832 384 B1**
(45) Date of publication and mention of the grant of the patent: **03.12.2025**
(21) Application number: 19845316.9
(22) Date of filing: 22.07.2019
(51) Int. Cl.: G02F 1/1339

(54) **LIQUID CRYSTAL PANEL, MANUFACTURING METHOD THEREFOR AND APPLICATION THEREOF**
FLÜSSIGKRISTALLTAFEL, HERSTELLUNGSVERFAHREN DAFÜR UND ANWENDUNG DAVON
PANNEAU À CRISTAUX LIQUIDES, PROCÉDÉ DE FABRICATION ASSOCIÉ ET APPLICATION ASSOCIÉE

(30) Priority: 01.08.2018 CN 201810865928
(43) Date of publication of application: 09.06.2021
(73) Proprietor: Shenzhen TCL New Technology Co., Ltd, Shenzhen, Guangdong 518052 (CN)
(72) Inventor: LI, Zhihui, Shenzhen, Guangdong 518052 (CN)
(74) Representative: GLP S.R.L.
(86) International application number: PCT/CN2019/096985
(87) International publication number: WO 2020/024822

(56) References cited:
- CN-A- 103 885 249
- CN-A- 104 298 013
- CN-A- 105 116 635
- JP-A- 2004 170 521
- JP-A- 2009 015 122
- JP-A- 2009 133 930
- US-A1- 2014 063 432
- US-A1- 2014 293 211
- US-A1- 2015 022 772
- US-A1- 2016 011 444

## Description

### TECHNICAL FIELD

The present disclosure relates to the field of liquid crystal display technology, and more particularly, to a liquid crystal panel, a manufacturing method therefor and an application thereof.

### BACKGROUND OF THE ART

A TFT-LCD is currently a most widely used display panel, having a mature technology and a low cost. However, in a real practice, a problem of leakage often occurs. In short, a liquid crystal panel is sandwiching liquid crystal between two pieces of glass, and the two pieces of glass are sealed together by a sealant, thus the sealant plays a role of fixing glass into a box and preventing a leakage of the liquid crystal. However, the sealant itself has a certain permeability for moisture, and currently a non-display area of a liquid crystal panel is getting smaller and smaller, which causes a width of the sealant narrower and narrower, making the liquid crystal panel often appear a case that water vapor corrodes the sealant and the liquid crystal leaks out in a real practice.

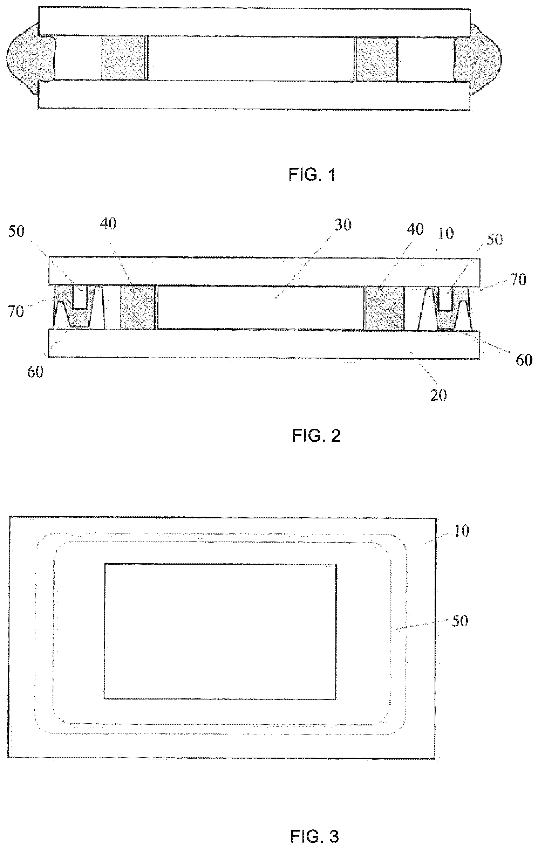

Currently, a method to deal with a liquid crystal leakage is adding a sealing process after a cell process, that is, adding one more layer of a sealing adhesive to a plurality of outer edges of the glass, to reduce a risk of leakage caused by water vapor invading the sealant (shown as FIG. 1). The method adds a sealing process in addition, which has reduced a production efficiency, and a plurality of problems often occur including colliding and peeling off the sealing adhesive during a plurality of processes including transporting the liquid crystal panel and assembling into a whole machine.

US20160011444A1 discloses a display panel, a manufacturing method thereof, and a display device. The display panel effectively prevents the sealant from extending toward the edge of the display panel by forming the first sealant-blocking structure on an outside of the sealant, and hence achieves an ultra-narrow frame or unframed design. JP2009133930A discloses a liquid crystal display element narrow-framed, while fully securing a required seal width, and to provide a manufacturing method for the liquid crystal display element. The narrowing of the frame area of the liquid crystal display panel is made possible by narrowing the width (hereinafter referred to as seal width) of the sealing material and reducing the arrangement area of the sealing material, but to reduce the arrangement area of the seal. JP2004170521A discloses a method for manufacturing liquid crystal display element, and a liquid crystal display element, which is to prevent a liquid crystal and a sealant from coming into contact with each other in bonding an array substrate and a CF substrate together.

The present invention is defined in the appended claims. Any embodiment in the description that does not fall within the scope of the claims shall be regarded as an example for understanding the present invention.

Therefore, the current technology needs to be improved and developed.

### BRIEF SUMMARY OF THE DISCLOSURE

According to the above described defects, the purpose of the present disclosure is providing a liquid crystal panel, a manufacturing method therefor and an application thereof, in order to solve a problem in the prior art that the liquid crystal in the liquid crystal panel is easy to leak out..

A technical solution of the present disclosure to solve the technical problems is as follows:
According to an embodiment of the present application, a liquid crystal panel comprises a first glass substrate, a second glass substrate, a liquid crystal layer sealed between the first glass substrate and the second glass substrate, and a sealant arranged to seal the first glass substrate and the second glass substrate into a cell, surrounding an edge of the first glass substrate, there is a circle of pressing body protruding toward the second glass substrate arranged, while the second glass substrate has a groove body for accommodating the pressing body arranged, the pressing body is arranged between the edge of the first glass substrate and a periphery of the sealant, the groove body is arranged between an edge of the second glass substrate and the periphery of the sealant, a gap between the groove body and the pressing body is filled with a sealing adhesive.

According to an embodiment of the present application, the groove body is formed by two closed annular protrusions having a same shape but different sizes sheathing together in and out.

According to an embodiment of the present application, the groove body is formed by two closed annular protrusions having a same shape but different sizes sheathing together in and out.

According to an embodiment of the present application, an end of the pressing body has a plurality of openings arranged.

According to an embodiment of the present application, the opening is arranged along an inner side of the groove body toward an outer side of the groove body.

According to an embodiment of the present application, the pressing body is close to the inner side of the groove body when being accommodated into the groove body.

According to an embodiment of the present application, the groove body is arranged with a height of one side close to the edge of the second glass substrate smaller than a height of one side close to the sealant, the height of the groove body is greater than or equal to a height of the pressing body.

According to an embodiment of the present application, the sealant has a plurality of silicon balls for a supporting function doped.

According to an embodiment of the present application, a height of the silicon ball is greater than or equal to the height of the groove body.

According to an embodiment of the present application, the pressing body is stacked by one or more layers of a black matrix, a colored photoresist, a gap photoresist, a metal layer, and an insulation layer, the groove body is stacked by one or more layers of a black matrix, a colored photoresist, a gap photoresist, a metal layer, and an insulation layer.

According to an embodiment of the present application, the liquid crystal panel further comprises a colored filter and an alignment layer arranged between the first glass substrate, the liquid crystal layer and the second glass substrate, and a polarizing plate arranged on an outer side of the first glass substrate and an outer side of the second glass substrate.

A manufacturing method as claimed in claim 12.

The manufacturing method for the liquid crystal panel, wherein a spray amount of the sealing adhesive = an inner volume of the groove body - a volume of the pressing body + an overflow amount of the sealing adhesive.

An application of the liquid crystal panel described above, wherein the liquid crystal panel is applied in a cell phone, a computer, a tablet, or a television.

Benefits: The liquid crystal panels provided in the present disclosure, by arranging a pressing body and a groove body respectively at the edges of the glass substrates surrounding both sides of the liquid crystal panel, the groove body accommodates the pressing body, and a gap between the groove body and the pressing body is filled with the sealing adhesive, that has not only packaged the sealant by the sealing adhesive, preventing from being corroded by the water vapor, and avoiding the problem of the liquid leakage, but also because of arranging the pressing body and the groove body, the sealing adhesive may be firmly fitted between the edges of the glass substrates on both sides of the liquid crystal panel and the sealant, instead of being easily knocked off, and a problem that the sealant is corroded by the water vapor before causing the liquid crystal to leak out has also been avoided. The liquid crystal panel is easy to assemble and transport, while a problem in the prior art that the liquid crystal in a liquid crystal panel is easy to leak out has been solved.

### BRIEF DESCRIPTION OF THE DRAWINGS

FIG. 1 illustrates a schematic structural diagram of a liquid crystal panel manufactured by a conventional sealing process
FIG. 2 illustrates a schematic structural diagram of a liquid crystal panel according to an embodiment in the present disclosure.
FIG. 3 illustrates a schematic structural diagram of a side of a first glass substrate of a liquid crystal panel according to an embodiment in the present disclosure.
FIG. 4 illustrates a schematic structural diagram of a side of a second glass substrate of a liquid crystal panel according to an embodiment in the present disclosure.
FIG. 5 illustrates a schematic diagram of a manufacturing process of a liquid crystal panel according to an embodiment in the present disclosure.

### DETAILED DESCRIPTION OF EMBODIMENTS

In order to make the purpose, technical solution and the advantages of the present disclosure clearer and more explicit, further detailed descriptions of the present disclosure are stated herein. It should be understood that the detailed embodiments of the disclosure described here are used to explain the present disclosure only, instead of limiting the present disclosure.

The present disclosure provides a liquid crystal panel, shown as FIGs. 2 to 4, comprising: a first glass substrate 10, a second glass substrate 20, a liquid crystal layer 30, and a sealant 40, the sealant 40 is arranged near an edge of the first glass substrate 10 and the second glass substrate 20, applied to sealing the first glass substrate 10, the second glass substrate 20, and the liquid crystal layer 30 between the first glass substrate 10 and the second glass substrate 20 into a cell, surrounding the edge of the first glass substrate 10 (outside the sealant 40), there is a circle of pressing body 50 protruding toward the second glass substrate 20, and the second glass substrate 20 has a groove body 60 arranged for accommodating the pressing body 50, that is, the groove body 60 is arranged surrounding the edge of the second glass substrate 20 and corresponding to the pressing body 50, a gap between the groove body 60 and the pressing body 50 has a sealing adhesive 70 filled, the sealing adhesive 70 and the sealant 40 are prepared and formed at a same time.

Obviously, in a plurality of embodiments, in order to realize a function of liquid crystal displaying, between the first glass substrate 10, the liquid crystal layer 30 and the second glass substrate 20, there are a plurality of other functional layers arranged, including a colored filter, an alignment layer and more, as well as a plurality of polarizing plates arranged on an outer side of the first glass substrate 10 and the second glass substrate 20.

In the present disclosure, by the sealant 40, the liquid crystal layer 30, the first glass substrate 10 and the second glass substrate 20 are fixed into a cell, while the sealant 40 forms an internal barrier to prevent a liquid crystal leakage; the sealing adhesive 70 is filled in the gap between the groove body 60 and the pressing body 50, while the groove body 60 and the pressing body 50 are arranged respectively between edges of two glass substrates and the sealant 40, that is, by a combination of the groove body 60, the pressing body 50 and the sealing adhesive 70, the sealant 40 is packaged in the two glass substrates, providing a sealing and a protection to the sealant 40, preventing the sealant 40 from being corroded by water vapor, and forming an external barrier to prevent the liquid crystal leakage. In addition, since the pressing body 50 is accommodated by the groove body 60, while the sealing adhesive 70 is filled in a gap between two of them, thus a presence of the pressing body 50 and the groove 60 may form a snap action onto the sealing adhesive 70 before firmly fixing the sealing adhesive 70 from being easily fallen off. A plurality of problems in the prior art have been solved, including the sealing adhesive gets fallen off after being collided during a process of shipping the liquid crystal panel and assembling into a whole machine, caused by simply adding a sealing adhesive to an outer edge of a glass. In addition, in the present disclosure, both the sealing adhesive 70 and the sealant 40 are prepared and formed at a same time, while preparing the sealant 40 is an existing process when manufacturing the liquid crystal panel, therefore, the present disclosure will not increase a production process of the sealing adhesive 70.

In the liquid crystal panel, the sealant 40 is arranged between two glass substrates surrounding the liquid crystal layer 30, in order to fully realize a sealing and protection to the sealant 40, the pressing body 50 in the present disclosure is also arranged surrounding the edge of the first glass substrate 10, that is, in some embodiments, the pressing body 50 is also arranged between the edge of the first glass substrate 10 and an outer periphery of the sealant 40 (shown as FIG. 3), showing as a closed structure in a whole.

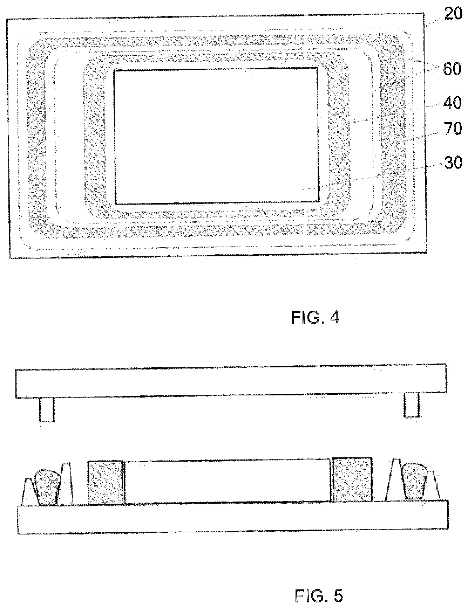

In some embodiments, the groove body 60 is formed by two closed annular protrusions sheathing together in and out, and there is a gap between the two closed annular protrusions, the gap is a space for accommodating the pressing body 50, making the groove body 60 shown as an uninterrupted ring structure in a whole (as shown in FIG. 4), that is, the groove body 60 comprises an inner closed annular protrusion and an outer closed annular protrusion sleeved outside the inner closed annular protrusion, and a height of the outer closed annular protrusion is smaller than a height of the inner closed annular protrusion, that is, the groove body 60 is arranged with a height of one side close to the edge of the second glass substrate 20 smaller than a height of one side close to the sealant 40, in such a way, after finishing pairing two glass substrates, a sealing adhesive squeeze-out opening will be left between an outside of the groove body 60 and the first glass substrate 10, making any excess sealing adhesive filled in the groove body 60 in advance prefer to flow out to the outside, instead of overflowing to the inside, to avoid contaminating an internal area of the liquid crystal display. In some embodiments, the groove body 60 is formed by two closed annular protrusions having a same shape but different sizes sheathing together in and out.

In some embodiments, an end of the pressing body 50 has a plurality of openings arranged. In some embodiments, the openings are arranged laterally at a bottom of the pressing body 50, along a direction from an inner side of the groove body 60 toward an outer side, such an arrangement of the openings facilitates the sealing adhesive 70 on an inner side of the pressing body to flow out to the outside through the openings on the pressing body 50.

In some embodiments, for the liquid crystal panel, the pressing body 50 is aligned close to the inner side of the groove body 60 when being accommodated into the groove body 60, to reduce an overflow amount of the sealing adhesive flowing to the inner side, and prevent the sealing adhesive from overflowing too much to the inner side of the groove body 60 and contaminating the internal area of the liquid crystal display, while at a same time, no sealing effect of the sealing adhesive 70 will be affected.

In some embodiments, for the liquid crystal panel, the sealant 40 has a plurality of silicon balls for a supporting function doped; In some embodiments, a height of the silicon ball is greater than or equal to a height of the groove body 60. Although a function of the sealant 40 is sealing the two glass substrates together and packaging the liquid crystal inside, a space for the liquid crystal must be left, thus it is needed to ensure a certain gap between the first glass substrate 10 and the second glass substrate 20, thus it is needed to dope the silicon balls in the sealant 40 for the supporting function, to prevent the first glass substrate 10 and the second glass substrate 20 from fitting too close and affecting the liquid crystal layer; while setting the height of the silicon ball greater than or equal to the height of the groove body, the silicon ball may play an inherent supporting role thereof, being able to ensure that the gap between the two glass substrates is uniform, and eventually a TFT-LCD will not display poorly; in some embodiments, due to an accommodation function of the groove body 60 to the pressing body 50 shall be achieved, the height of the groove body 60 should be greater than or equal to the height of the pressing body 50.

Manufacturing the pressing body 50 and the groove body 60 of the liquid crystal panel needs no extra materials or extra processes. In some embodiments, the pressing body 50 is stacked by one or more layers of a black matrix, a color photoresist, a gap photoresist, a metal layer, and an insulation layer, the groove body 60 may also be stacked by one or more layers of a black matrix, a color photoresist, a gap photoresist, a metal layer, and an insulation layer.

The present disclosure further provides a manufacturing method for the liquid crystal panel, wherein comprising a plurality of steps:
S1. producing the sealant on the second glass substrate for sealing the liquid crystal, and spraying the sealing adhesive into the groove body;
S2. sealing the liquid crystal in a region defined by the sealant, then pressing the first glass substrate onto the second glass substrate, making the pressing body insert into the sealant, an excess sealing adhesive in the groove body overflows, and after curing, the liquid crystal panel is obtained.

In some embodiments, in the step S1, a spray amount of the sealing adhesive equals to an inner volume of the groove body minus a volume of the pressing body plus an overflow amount of the sealing adhesive, that is, the spray amount of the sealing adhesive = an inner volume of the groove body - a volume of the pressing body + an overflow amount of the sealing adhesive, so as to achieve that when sealing the edges of the sealant with the sealing adhesive, the sealing adhesive will not overflow out of the liquid crystal panel.

In some embodiments, in the step S2, by pressing the first glass substrate onto the second glass substrate, making the pressing body insert into the sealant, that is, achieving accommodating the pressing body into the groove body, thus under an action of the sealant and an action of the accommodation of the pressing body and the groove body, the first glass substrate is located and fixed onto the second glass substrate, an excess sealing adhesive in the groove body overflows, and curing, a process of the curing comprises a thermal curing and a UV curing, so as to cure both the sealant and the sealing adhesive.

In the prior arts, a sealing screen and manufacturing process of the liquid crystal panel responding to a liquid leakage comprises a sealant coating, an assembly alignment, a thermal curing, a primary UV light curing, a sealing adhesive coating, and a secondary UV light curing. While in the embodiments provided by the present disclosure, since the groove body and the pressing body are both prepared in advance, performing a cell forming process after the two glass substrates are manufactured, and the sealing adhesive is coated inside the groove body, shown as FIG. 5, both the sealant and the sealing adhesive may be synchronized with two nozzles at a same time, which may reduce a manufacturing time and improve a production efficiency. When the pressing body is inserted into the groove body, the pressing body will squeeze the sealing adhesive out of the groove body. Since the outside of the groove body is lower than the inner side thereof, the sealing adhesive will flow along the outside of the groove body, a final effect is shown as FIG. 2. After assembling, a heat curing and a UV curing are performed. Since manufacturing the sealant itself has already required a UV irradiation, thus a curing process of the sealing adhesive can be completed simultaneously without any additional steps. Compared with the sealing screen and manufacturing process of the liquid crystal panel in the prior art, a separate UV curing process for the sealing adhesive is omitted.

The present disclosure can realize the coating and curing of the sealing adhesive without adding any new materials or new processes, simplifying an original process. Also a design of the groove body has also increased an ability of preventing the water vapor from intrusion thus enhanced a reliability of the liquid crystal panel.

The embodiments provided in the present disclosure further provides an application of the liquid crystal panel described above, wherein the liquid crystal panel is applied in a cell phone, a computer, a tablet, or a television.

All above, the liquid crystal panels provided in the embodiments of the present disclosure, by arranging a pressing body and a groove body respectively at the edges of the glass substrates surrounding both sides of the liquid crystal panel, the groove body accommodates the pressing body, and a gap between the groove body and the pressing body is filled with the sealing adhesive, that has not only sealed the sealant by the sealing adhesive, preventing from being corroded by the water vapor, and avoiding the problem of the liquid leakage, but also because of arranging the pressing body and the groove body, the sealing adhesive may be firmly fitted between the edges of the glass substrates on both sides of the liquid crystal panel and the sealant, instead of being easily knocked off, and a problem that the sealant is corroded by the water vapor before causing the liquid crystal to leak out has also been avoided. The liquid crystal panel is easy to assemble and transport, while a problem in the prior art that the liquid crystal in a liquid crystal panel is easy to leak out has been solved.

It should be understood that, the application of the present invention is not limited to the above examples listed.

## Claims

1. A liquid crystal panel, wherein comprising a first glass substrate (10), a second glass substrate (20), a liquid crystal layer (30) sealed between the first glass substrate (10) and the second glass substrate (20), and a sealant (40) arranged to seal the first glass substrate (10) and the second glass substrate (20) into a cell, surrounding an edge of the first glass substrate (10), there is a circle of pressing body (50) protruding toward the second glass substrate (20) arranged, while the second glass substrate (20) has a groove body (60) for accommodating the pressing body (50) arranged, the pressing body (50) is arranged between the edge of the first glass substrate (10) and a periphery of the sealant (40), the groove body (60) is arranged between an edge of the second glass substrate (20) and the periphery of the sealant (40), a gap between the groove body (60) and the pressing body (50) is filled with a sealing adhesive (70).

2. The liquid crystal panel according to claim 1, wherein the groove body (60) is formed by two closed annular protrusions having a same shape but different sizes sheathing together in and out.

3. The liquid crystal panel according to claim 2, wherein the two closed annular protrusions are sheathing together, and a height of the annular protrusion close to an edge of the second glass substrate (20) is less than a height of the annular protrusion close to the sealant (40).

4. The liquid crystal panel according to claim 1, wherein an end of the pressing body (50) has a plurality of openings arranged.

5. The liquid crystal panel according to claim 4, wherein the opening is arranged along an inner side of the groove body (60) toward an outer side of the groove body (60).

6. The liquid crystal panel according to claim 5, wherein the pressing body (50) is close to the inner side of the groove body (60) when being accommodated into the groove body (60).

7. The liquid crystal panel according to claim 1, wherein the groove body (60) is arranged with a height of one side close to the edge of the second glass substrate (20) smaller than a height of one side close to the sealant (40), the height of the groove body (60) is greater than or equal to a height of the pressing body (50).

8. The liquid crystal panel according to claim 1, wherein the sealant (40) has a plurality of silicon balls for a supporting function doped.

9. The liquid crystal panel according to claim 8, wherein a height of the silicon ball is greater than or equal to the height of the groove body (60).

10. The liquid crystal panel according to claim 4, wherein the pressing body (50) is stacked by one or more layers of a black matrix, a colored photoresist, a gap photoresist, a metal layer, and an insulation layer, the groove body (60) is stacked by one or more layers of a black matrix, a colored photoresist, a gap photoresist, a metal layer, and an insulation layer.

11. The liquid crystal panel according to claim 1, wherein further comprising a colored filter and an alignment layer arranged between the first glass substrate (10), the liquid crystal layer (30) and the second glass substrate (20), and a polarizing plate arranged on an outer side of the first glass substrate (10) and an outer side of the second glass substrate (20).

12. A manufacturing method for the liquid crystal panel according to any one of claims 1-11, wherein comprising a plurality of steps:
providing a first glass substrate (10), a second glass substrate (20), a liquid crystal layer (30) for being
sealed between the first glass substrate (10) and the second glass substrate (20);
producing a sealant (40) on the second glass substrate (20) for packaging the liquid crystal layer, and spraying a sealing adhesive (70) into a groove body (60);
providing a circle of pressing body (50) protruding toward the second glass substrate (20) arranged, while the second glass substrate (20) has the groove body (60) for accommodating the pressing body (50) arranged, the pressing body (50) is arranged between the edge of the first glass substrate (10) and a periphery of the sealant (40), the groove body (60) is arranged between an edge of the second glass substrate (20) and the periphery of the sealant (40);
packaging the liquid crystal layer in a region defined by the sealant (40), then pressing the first glass substrate (10) onto the second glass substrate (20), making the pressing body (50) insert into the sealing adhesive (70), the excess sealing adhesive (70) in the groove body (60) overflows, and after curing, the liquid crystal panel is obtained.

13. The manufacturing method for the liquid crystal panel according to claim 12, wherein a spray amount of the sealing adhesive (70) = an inner volume of the groove body (60) - a volume of the pressing body (50) + an overflow amount of the sealing adhesive (70).

14. An application of the liquid crystal panel according to any one of claims 1-11, wherein the liquid crystal panel is applied in a cell phone, a computer, a tablet, or a television.

## Patentansprüche

1. Flüssigkristalltafel, umfassend ein erstes Glassubstrat (10), ein zweites Glassubstrat (20), eine zwischen dem ersten Glassubstrat (10) und dem zweiten Glassubstrat (20) abgedichtete Flüssigkristallschicht (30) sowie ein Dichtmittel (40), das angeordnet ist, um das erste Glassubstrat (10) und das zweite Glassubstrat (20) in eine Zelle abzudichten,
wobei um einen Rand des ersten Glassubstrats (10) ein in Richtung des zweiten Glassubstrats (20) vorstehender ringförmiger Presskörper (50) angeordnet ist,
wobei das zweite Glassubstrat (20) einen Nutkörper (60) zum Aufnehmen des Presskörpers (50) aufweist,
wobei der Presskörper (50) zwischen dem Rand des ersten Glassubstrats (10) und einem Umfang des Dichtmittels (40) angeordnet ist,
wobei der Nutkörper (60) zwischen einem Rand des zweiten Glassubstrats (20) und dem Umfang des Dichtmittels (40) angeordnet ist,
und wobei ein Spalt zwischen dem Nutkörper (60) und dem Presskörper (50) mit einem Dichtklebstoff (70) gefüllt ist.

2. Flüssigkristalltafel nach Anspruch 1, wobei der Nutkörper (60) durch zwei geschlossene ringförmige Vorsprünge gebildet ist, wobei die zwei geschlossenen ringförmigen Vorsprünge eine dieselbe Form, jedoch unterschiedliche Größen aufweisen und ineinander gesteckt sind.

3. Flüssigkristalltafel nach Anspruch 2, wobei die zwei geschlossenen ringförmigen Vorsprünge ineinander gesteckt sind und wobei eine Höhe des ringförmigen Vorsprungs, der sich in der Nähe eines Randes des zweiten Glassubstrats (20) befindet, kleiner ist als eine Höhe des ringförmigen Vorsprungs, der sich in der Nähe des Dichtmittels (40) befindet.

4. Flüssigkristalltafel nach Anspruch 1, wobei ein Ende des Presskörpers (50) mit mehreren Öffnungen versehen ist.

5. Flüssigkristalltafel nach Anspruch 4, wobei die Öffnung entlang einer inneren Seite des Nutkörpers (60) zu einer äußeren Seite des Nutkörpers (60) angeordnet ist.

6. Flüssigkristalltafel nach Anspruch 5, wobei der Presskörper (50) beim Aufnehmen in den Nutkörper (60) der inneren Seite des Nutkörpers (60) angenähert ist.

7. Flüssigkristalltafel nach Anspruch 1, wobei der Nutkörper (60) so angeordnet ist, dass eine Höhe einer Seite in der Nähe des Randes des zweiten Glassubstrats (20) kleiner ist als eine Höhe einer Seite in der Nähe des Dichtmittels (40), und wobei die Höhe des Nutkörpers (60) größer oder gleich einer Höhe des Presskörpers (50) ist.

8. Flüssigkristalltafel nach Anspruch 1, wobei das Dichtmittel (40) mehrere zur Stützfunktion dienende Siliciumkugeln umfasst.

9. Flüssigkristalltafel nach Anspruch 8, wobei eine Höhe der Siliciumkugel größer oder gleich der Höhe des Nutkörpers (60) ist.

10. Flüssigkristalltafel nach Anspruch 4, wobei der Presskörper (50) aus einer oder mehreren Schichten einer Schwarzmatrix, eines Farb-Photoresists, eines Spalt-Photoresists, einer Metallschicht und einer Isolationsschicht gestapelt ist,und wobei der Nutkörper (60) aus einer oder mehreren Schichten einer Schwarzmatrix, eines Farb-Photoresists, eines Spalt-Photoresists, einer Metallschicht und einer Isolationsschicht gestapelt ist.

11. Flüssigkristalltafel nach Anspruch 1, ferner umfassend einen Farbfilter und eine zwischen dem ersten Glassubstrat (10), der Flüssigkristallschicht (30) und dem zweiten Glassubstrat (20) angeordnete Ausrichtungsschicht sowie eine Polarisationsplatte, die jeweils auf einer Außenseite des ersten Glassubstrats (10) und auf einer Außenseite des zweiten Glassubstrats (20) angeordnet ist.

12. Herstellungsverfahren für die Flüssigkristalltafel nach einem der Ansprüche 1 bis 11, umfassend mehrere Schritte:
Bereitstellen eines ersten Glassubstrats (10), eines zweiten Glassubstrats (20) und einer Flüssigkristallschicht (30), die zwischen dem ersten Glassubstrat (10) und dem zweiten Glassubstrat (20) abgedichtet wird;
Herstellen eines Dichtmittels (40) auf dem zweiten Glassubstrat (20) zum Einkapseln der Flüssigkristallschicht und Einsprühen eines Dichtklebstoffs (70) in einen Nutkörper (60);
Bereitstellen eines in Richtung des zweiten Glassubstrats (20) vorstehenden ringförmigen Presskörpers (50), wobei das zweite Glassubstrat (20) den Nutkörper (60) zum Aufnehmen des Presskörpers (50) aufweist, der Presskörper (50) zwischen dem Rand des ersten Glassubstrats (10) und einem Umfang des Dichtmittels (40) angeordnet ist, und der Nutkörper (60) zwischen einem Rand des zweiten Glassubstrats (20) und dem Umfang des Dichtmittels (40) angeordnet ist;
Einkapseln der Flüssigkristallschicht in einen durch das Dichtmittel (40) begrenzten Bereich, danach Aufpressen des ersten Glassubstrats (10) auf das zweite Glassubstrat (20), so dass der Presskörper (50) in den Dichtklebstoff (70) eingesteckt wird, wobei überschüssiger Dichtklebstoff (70) in den Nutkörper (60) überläuft, und nach dem Aushärten die Flüssigkristalltafel erhalten wird.

13. Herstellungsverfahren für die Flüssigkristalltafel nach Anspruch 12, wobei eine Sprühmenge des Dichtklebstoffs (70) gleich einem inneren Volumen des Nutkörpers (60) minus einem Volumen des Presskörpers (50) plus einer Überlaufmenge des Dichtklebstoffs (70) ist.

14. Verwendung der Flüssigkristalltafel nach einem der Ansprüche 1 bis 11, wobei die Flüssigkristalltafel in einem Mobiltelefon, einem Computer, einem Tablet oder einem Fernsehgerät verwendet wird.

## Revendications

1. Panneau à cristaux liquides, comprenant un premier substrat de verre (10), un second substrat de verre (20), une couche de cristaux liquides (30) scellée entre le premier substrat de verre (10) et le second substrat de verre (20), et un matériau d'étanchéité (40) agencé pour sceller le premier substrat de verre (10) et le second substrat de verre (20) dans une cellule, entourant un bord du premier substrat de verre (10), il y a un cercle de corps de pression (50) faisant saillie vers le second substrat de verre (20) agencé, tandis que le second substrat de verre (20) a un corps de rainure (60) pour recevoir le corps de pression (50) agencé, le corps de pression (50) est agencé entre le bord du premier substrat de verre (10) et une périphérie du matériau d'étanchéité (40), le corps de rainure (60) est agencé entre un bord du second substrat de verre (20) et la périphérie du matériau d'étanchéité (40), un espace entre le corps de rainure (60) et le corps de pression (50) est rempli d'un adhésif d'étanchéité (70).

2. Panneau à cristaux liquides selon la revendication 1, dans lequel le corps de rainure (60) est formé par deux saillies annulaires fermées ayant la même forme mais des tailles différentes s'enveloppant ensemble à l'intérieur et à l'extérieur.

3. Panneau à cristaux liquides selon la revendication 2, dans lequel les deux saillies annulaires fermées se recouvrent ensemble, et une hauteur de la saillie annulaire à proximité d'un bord du second substrat de verre (20) est inférieure à une hauteur de la saillie annulaire à proximité du matériau d'étanchéité (40).

4. Panneau à cristaux liquides selon la revendication 1, dans lequel une extrémité du corps de pression (50) comporte une pluralité d'ouvertures agencées.

5. Panneau à cristaux liquides selon la revendication 4, dans lequel l'ouverture est agencée le long d'un côté intérieur du corps de rainure (60) vers un côté extérieur du corps de rainure (60).

6. Panneau à cristaux liquides selon la revendication 5, dans lequel le corps de pression (50) est proche du côté intérieur du corps de rainure (60) lorsqu'il est logé dans le corps de rainure (60).

7. Panneau à cristaux liquides selon la revendication 1, dans lequel le corps de rainure (60) est agencé avec une hauteur d'un côté proche du bord du second substrat de verre (20) inférieure à une hauteur d'un côté proche du matériau d'étanchéité (40), la hauteur du corps de rainure (60) est supérieure ou égale à une hauteur du corps de pression (50).

8. Panneau à cristaux liquides selon la revendication 1, dans lequel l'agent d'étanchéité (40) a une pluralité de billes de silicium pour une fonction de support dopée.

9. Panneau à cristaux liquides selon la revendication 8, dans lequel une hauteur de la bille de silicium est supérieure ou égale à la hauteur du corps de rainure (60).

10. Panneau à cristaux liquides selon la revendication 4, dans lequel le corps de pression (50) est empilé par une ou plusieurs couches d'une matrice noire, d'une photorésine colorée, d'une photorésine d'espacement, d'une couche métallique et d'une couche d'isolation, le corps de rainure (60) est empilé par une ou plusieurs couches d'une matrice noire, d'une photorésine colorée, d'une photorésine d'espacement, d'une couche métallique et d'une couche d'isolation.

11. Panneau à cristaux liquides selon la revendication 1, comprenant en outre un filtre coloré et une couche d'alignement agencée entre le premier substrat de verre (10), la couche de cristaux liquides (30) et le second substrat de verre (20), et une plaque de polarisation agencée sur un côté extérieur du premier substrat de verre (10) et un côté extérieur du second substrat de verre (20).

12. Procédé de fabrication du panneau à cristaux liquides selon l'une quelconque des revendications 1 à 11, comprenant une pluralité d'étapes :
fournir un premier substrat de verre (10), un second substrat de verre (20), une couche de cristaux liquides (30) pour être scellée entre le premier substrat de verre (10) et le second substrat de verre (20) ;
produire un matériau d'étanchéité (40) sur le second substrat de verre (20) pour emballer la couche de cristaux liquides, et pulvériser un adhésif d'étanchéité (70) dans un corps de rainure (60) ;
fournir un cercle de corps de pression (50) faisant saillie vers le second substrat de verre (20) agencé, tandis que le second substrat de verre (20) a le corps de rainure (60) pour recevoir le corps de pression (50) agencé, le corps de pression (50) est agencé entre le bord du premier substrat de verre (10) et une périphérie du matériau d'étanchéité (40), le corps de rainure (60) est agencé entre un bord du second substrat de verre (20) et la périphérie du matériau d'étanchéité (40) ;
emballer la couche de cristaux liquides dans une région définie par le matériau d'étanchéité (40), puis presser le premier substrat de verre (10) sur le second substrat de verre (20), faire insérer le corps de pression (50) dans l'adhésif d'étanchéité (70), l'adhésif d'étanchéité en excès (70) dans le corps de rainure (60) déborde, et après durcissement, le panneau de cristaux liquides est obtenu.

13. Procédé de fabrication pour le panneau à cristaux liquides selon la revendication 12, dans lequel une quantité de pulvérisation de l'adhésif d'étanchéité (70) = un volume interne du corps de rainure (60) - un volume du corps de pression (50) + une quantité de débordement de l'adhésif d'étanchéité (70).

14. Application du panneau à cristaux liquides selon l'une quelconque des revendications 1 à 11, dans laquelle le panneau à cristaux liquides est appliqué dans un téléphone cellulaire, un ordinateur, une tablette ou une télévision.
